# EUROPEAN PATENT SPECIFICATION

(11) **EP 4 482 240 B1**
(45) Date of publication and mention of the grant of the patent: **03.12.2025**
(21) Application number: 23180596.1
(22) Date of filing: 21.06.2023
(51) Int. Cl.: H04W 72/23, H04W 74/00, H04W 72/1263, H04W 72/52

(54) **METHOD FOR OPERATING A USER EQUIPMENT IN OR WITH A MOBILE COMMUNICATION NETWORK, USER EQUIPMENT, SYSTEM OR TELECOMMUNICATIONS NETWORK, PROGRAM AND COMPUTER-READABLE MEDIUM**
VERFAHREN ZUM BETREIBEN EINES BENUTZERGERÄTS IN ODER MIT EINEM MOBILKOMMUNIKATIONSNETZ, BENUTZERGERÄT, SYSTEM ODER TELEKOMMUNIKATIONSNETZ, PROGRAMM UND COMPUTERLESBARES MEDIUM
PROCÉDÉ DE FONCTIONNEMENT D'UN ÉQUIPEMENT UTILISATEUR DANS OU AVEC UN RÉSEAU DE COMMUNICATION MOBILE, ÉQUIPEMENT UTILISATEUR, SYSTÈME OU RÉSEAU DE TÉLÉCOMMUNICATION, PROGRAMME ET SUPPORT LISIBLE PAR ORDINATEUR

(43) Date of publication of application: 25.12.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- US-A1- 2006 018 277
- US-A1- 2012 099 430
- US-A1- 2017 367 116

## Description

### BACKGROUND

The present invention relates a method for operating a user equipment in or with a mobile communication network comprising a radio access network, wherein the radio access network comprises at least one base station entity, wherein data transmission is able to be conducted, between the user equipment and the base station entity and using an air interface between them, in downlink direction, involving data being transmitted by the base station entity and received by the user equipment, and/or in uplink direction, involving data being transmitted by the user equipment and received by the base station entity.

Furthermore, the present invention relates to a user equipment for being operated in or with a mobile communication network, wherein the mobile communication network comprises a radio access network, wherein the radio access network comprises at least one base station entity, wherein data transmission is able to be conducted, between the user equipment and the base station entity and using an air interface between them, in downlink direction, involving data being received by the user equipment, and/or in uplink direction, involving data being transmitted by the user equipment.

Additionally, the present invention relates to a system or to a telecommunications network for operating a user equipment in or with a mobile communication network comprising a radio access network, wherein the radio access network comprises at least one base station entity, wherein data transmission is able to be conducted, between the user equipment and the base station entity and using an air interface between them, in downlink direction, involving data being transmitted by the base station entity and received by the user equipment, and/or in uplink direction, involving data being transmitted by the user equipment and received by the base station entity.

Furthermore, the present invention relates to a program and to a computer-readable medium for operating a user equipment in or with a telecommunications network comprising a radio access network according to the inventive method.

The present invention relates to the area of telecommunications networks, especially wireless telecommunications networks or mobile communication networks. Conventionally, mobile communication networks (or cellular networks) are typically designed such that data - especially user plane data - are able to be transmitted whenever the user equipment (i.e. especially an application of or related to the user equipment) wants to either send data towards the mobile communication network or receive data from the mobile communication network, especially via an access network or radio access network of or associated or connected to the mobile communication network; this general pattern (of data transmission on demand of the user equipment) being rather similar to IP-based networks where clients are able to request to be either provided with (user plane) date or to transmit user plane data.

Generally, the principle of cellular mobile communication networks has always been that once the user equipment has access to establish an radio resource control, RRC, connection with the mobile network, all services are, in principle, allowed for the respective user equipment. Historically, the access has only been controlled by the access class barring, ACB, mechanism. Later service specific access barring/control, SSAC, has been introduced, still being applied for the user equipment accessing a radio cell in order to establish an radio resource control connection.

Since the times of the definition and deployment of the LTE (long term evolution) standard, the user equipments are more of less continuously connected or, at least, transit often between idle and connected states (radio resource control states). Thus, the new RRC state inactive has been introduced, where the user equipment and the network keep the RRC connection and a faster, less signaling-heavy transition to the RRC connected state is possible; the RRC inactive state is also applicable in 5G (NR).

Additional disclosures can be found in documents US 2006/018277 A1 and US 2017/367116 A1.

Generally, there are proposals that have been made, especially in view of off-peak data transmission (e.g. based on a time (window), an indication is sent to the user equipment). Additionally, for internet-of-things services, a delay tolerant access has been proposed, which means that certain internet-of-things traffic is not so critically needed that it immediately needs to be sent but is able to be delayed (by the network assigning uplink grants to such user equipments) for a couple of seconds.

Hence, beyond that, there is presently no conventionally known active control architecture available that would enable to control - towards the user equipment in a cellular network - the transmission of data either towards the user equipment (i.e. in downlink direction) or from the user equipment towards the mobile communication network (or the radio access network; i.e. in uplink direction), i.e. regarding a control architecture towards the user equipment as to when the user equipment should be allowed to actively transmit data (or receive data) based on parameters such as (network) load and/or radio access network load, capacity and energy consideration over a longer term of, e.g. a plurality of seconds, minutes or even hours. Obviously, the control in uplink direction (i.e. for uplink data transmission) is always on the network side (in particular the radio access network), but presently, in cellular network or mobile communication networks, there is no such control architecture available in order to control data transmission functionality and especially to control or to negociate a temporal shift of data transmission.

### SUMMARY

An object of the present invention is to provide an effective and simple approach for operating a user equipment in or with a mobile communication network in a manner such that it is possible to actively control - towards the user equipment - the transmission of data either towards the user equipment (i.e. in downlink direction) or from the user equipment towards the mobile communication network (or the radio access network; i.e. in uplink direction), especially regarding as to when the user equipment is allowed to actively transmit data (or receive data) - especially based on parameters such as (network) load and/or radio access network (or (local) air interface) load, capacity and energy consideration - over a longer term of, e.g. a plurality of seconds, minutes or even hours. A further object of the present invention is to provide a corresponding user equipment, a corresponding system or telecommunications network, and a corresponding program and computer-readable medium.

The object of the present invention is achieved by a method according to claim 1.

It is thereby advantageously possible, according to the present invention, to provide a fine-grained control architecture and control signaling in order to possibly shift data transmissions in time and to enable data transmission more efficiently, especially in a more energy-efficient manner. Especially according to the present invention, the control signaling regarding such data transmission is especially based on standard protocols to control the data activity of the user equipment generally and especially not limited to the situation that the user equipment has already initiated a connection with the mobile communication network.

Especially, according to the present invention, it is rather aimed at triggering or inviting traffic from the user equipment - especially traffic that is not that critical such as it would needed to be immediately transmitted (which might be the case of (text) messages), but more like bulk data which can be also sent minutes or even hours later - instead of restricting certain data transmissions or traffic generated by the user equipment. Advantageously, this is able to be achieved by sending "activation bits" on a granularity of radio bearers and/or network slices to the respective user equipments in a radio cell; a trigger for such control bits might especially be low utilization of the radio network or the availability of a high amount of eco-friendly power (from solar, wind, etc) such that an CO₂-friendly communication environment is able to be realized.

According to the present invention, it is assumed that the user equipment is able to communicate with the mobile communication network, i.e. data transmission is able to be conducted, between the user equipment and the base station entity and using an air interface between them, typically both in downlink direction - involving data being transmitted by the base station entity and received by the user equipment - and in uplink direction - involving data being transmitted by the user equipment and received by the base station entity. The inventive method proposes, in a first step, that the base station entity transmits (and the user equipment receives) a transmission opportunity information, wherein the transmission opportunity information indicates the possibility for the user equipment to transmit data in uplink direction and/or the possibility for the user equipment to request the transmission of data in downlink direction. In a second step, the data transmission (in either uplink direction or in downlink direction or in both uplink and downlink direction) occurs, between the user equipment and the base station entity, according to the possibility or possibilities as indicated by means of the transmission opportunity information.

According to the present invention, it is advantageously possible and preferred that the transmission opportunity information indicates the possibility for the user equipment to transmit data in uplink direction and/or the possibility for the user equipment to request the transmission of data in downlink direction applying a certain granularity by means of using at least one out of the following:
-- the transmission opportunity information indicates the possibility or possibilities to transmit data to be generally available,
-- the transmission opportunity information is related to or inviting one traffic type or certain traffic types, especially broadband traffic or internet-of-things traffic,
-- the transmission opportunity information is related to or inviting traffic being related to one 5QI value or to certain 5QI values,
-- the transmission opportunity information is related to or inviting traffic being related to or transmitted using one bearer type or to certain bearer types,
-- the transmission opportunity information is related to or inviting traffic being related to or transmitted using one network slice or to certain network slices, especially allowed network slices and/or subscribed network slices and/or active network slices.

According to the present invention, it is thereby advantageously possible that the inventive method is able to be performed in a flexible and efficient manner.

According to the present invention, it is furthermore advantageously possible and preferred that the invited or incited data transmission and/or traffic especially involves delay-tolerant traffic and/or traffic that is either expected to definitively need to be transmitted at some later point in time, or traffic where, at least partly, only a potential need to be transmitted is expected,
wherein the invited or incited data transmission and/or traffic especially involves software updates or firmware updates or map updates, logging data, especially from machines or vehicles and especially for post-processing.

According to the present invention, it is thereby advantageously possible that the inventive method is able to be performed in a flexible and efficient manner.

According to the present invention, it is furthermore advantageously possible and preferred that - especially in case that the transmission opportunity information refers to the possibility or possibilities to use one or a plurality of network slices - the transmission opportunity information is transmitted as a bitmap information, especially a bitmap information transmitted using a suitable system information block, SIB,
wherein the bitmap information is especially referring to specific network slices, especially using a reference to one or a plurality of network slices and/or of pieces of slice/service type, SST, information of network slices,
wherein the bitmap information especially comprises up to 256 bits and is potentially able to address up to 256 different network slices and/or pieces of slice/service type, SST, information.

According to the present invention, it is thereby advantageously possible that the inventive method is able to be performed in a flexible and efficient manner.

According to the present invention, the base station entity and/or the mobile communication network transmits, to the user equipment, one or a plurality of configured network slices,
wherein the bitmap information, as the transmission opportunity information, refers to such configured network slices, and especially either indicates, to the user equipment and regarding each one of such configured network slices, the possibility to use transmit data in uplink direction and/or the possibility for the user equipment to request the transmission of data in downlink direction,
wherein especially the bitmap information comprises, regarding each one of such configured network slices,
   -- either one bit regarding the possibility to use transmit data in uplink direction and/or the possibility for the user equipment to request the transmission of data in downlink direction,
   -- or one bit regarding the possibility to use transmit data in uplink direction and another bit regarding the possibility for the user equipment to request the transmission of data in downlink direction.

According to the present invention, it is thereby advantageously possible that the inventive method is able to be performed in a flexible and efficient manner.

According to the present invention, it is furthermore advantageously possible and preferred that the transmission opportunity information comprises a start time indication and/or an end time indication and/or a data volume or data amount indication regarding the invitation or the incitation for the user equipment to transmit data in uplink direction and/or the invitation or the incitation for the user equipment to request the transmission of data in downlink direction,
especially a start time indication and/or an end time indication and/or a data volume or data amount indication per configured network slice,
wherein especially the start time indication is implicitly provided by means of transmitting the transmission opportunity information and wherein the transmission opportunity information comprises a duration information indicating the end time information, especially a duration information per configured network slice,
wherein especially the duration information indicates - regarding the invitation or the incitation for the user equipment to transmit data in uplink direction and/or the invitation or the incitation for the user equipment to request the transmission of data in downlink direction - a duration of 10 seconds, or of 20 seconds, or of 30 seconds, or of 45 seconds, or of 60 seconds, or of 90 seconds, or of 2 minutes, or of 3 minutes, or of 4 minutes, or of 5 minutes, or of 6 minutes, or of 8 minutes, or of 10 minutes, or of 15 minutes, or of 20 minutes, or of 25 minutes, or of 30 minutes, or of 45 minutes, or of 60 minutes, or of 90 minutes, or of 2 hours, or of 3 hours, or of 4 hours, or of 5 hours, or of 6 hours.

According to the present invention, it is thereby advantageously possible that the inventive method is able to be performed in a flexible and efficient manner.

According to the present invention, it is furthermore advantageously possible and preferred that the user equipment is able to have at least one of the following radio resource control states:
-- idle,
-- inactive and
-- connected,

wherein the transmission opportunity information is especially used and/or applied, by the user equipment, if in a radio resource control state idle or inactive or connected,
wherein especially the transmission opportunity information is transmitted using common control signaling and/or dedicated control signaling, wherein especially common control signaling is used in case that the user equipment is currently in radio resource control states idle or inactive and wherein especially dedicated control signaling is used in case that the user equipment is currently in radio resource control state connected.

According to the present invention, it is thereby advantageously possible that the inventive method is able to be performed in a flexible and efficient manner.

Furthermore, the present invention relates to a user equipment according to claim 7.

Additionally, the present invention relates to a system or to a telecommunications network according to claim 8.

Additionally, the present invention relates to a program comprising a computer readable program code which, when executed on a computer or on a user equipment, or on a base station entity or on a radio access network node, or in part on a user equipment and/or in part on a base station entity and/or in part on a radio access network node, causes the computer or the user equipment or the base station entity or the radio access network node to perform the inventive method.

Still additionally, the present invention relates to a computer-readable medium comprising instructions which, when executed on a computer or on a user equipment, or on a base station entity or on a radio access network node, or in part on a user equipment and/or in part on a base station entity and/or in part on a radio access network node, causes the computer or the user equipment or the base station entity or the radio access network node to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

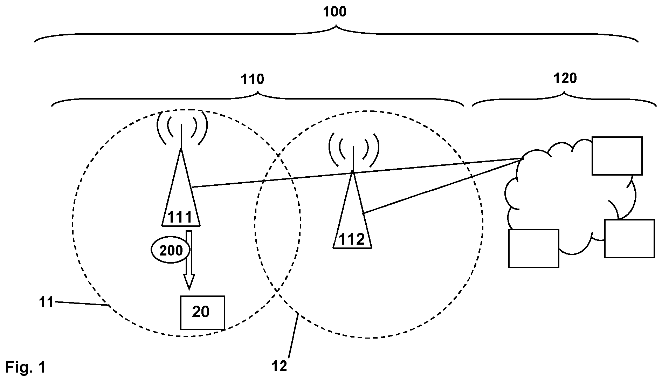

Figure 1 schematically illustrates a telecommunications network comprising an access network, a core network and a user equipment, wherein the radio access network comprises at least one base station entity and wherein data transmission is able to be conducted, between the user equipment and the base station entity in downlink direction and/or in uplink direction.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The telecommunications network 100, especially the core network 120, typically comprises a number of network functions or services (which are, however, not explicitly indicated by means of reference signs in Figure 1). Examples of such network functions or services include, e.g., an access and mobility management function, AMF, and/or a user plane function, UPF - especially in case of a 5G telecommunications network, in which case the core network 120 might also be called a 5G core (system) and the access network 110 or radio access network 110 a next-generation radio access network, NG-RAN. The access network 110 comprises a plurality of radio cells 11, 12, i.e. geographical areas are served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality or next-generation gNB functionality. The telecommunications network 100 is typically connected to a plurality of user equipments 20 (or, rather, the user equipments 20 are connected to the telecommunications network 100); however, for the sake of simplicity, only one of such user equipments 20 is schematically shown in Figure 1.

As it is generally and conventionally known, such mobile communication networks 100 provide the possibility to transmit data between the user equipment 20 and the base station entity 111 in downlink direction and/or in uplink direction.

In conventionally known mobile communication networks 100, there is currently no standardized control (or control architecture) on when (i.e. at which point in time) data - especially user plane data - is transmitted from the user equipment 20 in uplink direction. In downlink direction, it is the scheduler in the radio access network 110 (or, in the base station entity 111) that takes into account quality-of-service requirements of the bearer used based on service requirements and negotiated policy between the subscriber (i.e. the user equipment 20) and the operator and can schedule data in a way that transmission over the radio interface is optimized in terms of network efficiency and throughput, less based on energy-efficiency considerations.

Hence, what is lacking in conventionally known mobile communication networks is an active control architecture towards the user equipments regarding when the user equipment 20 should be allowed to actively transmit data based on load, capacity and energy consideration over longer term time scales.

According to the present invention, it is advantageously possible to provide a fine-grained control architecture and control signaling in order to possibly shift data transmissions in time and to enable data transmission more efficiently, especially in a more energy-efficient manner. Especially according to the present invention, the control signaling regarding such data transmission is especially based on standard protocols to control the data activity of the user equipment 20 generally and not once the user equipment 20 has already initiated a connection with the mobile communication network 100, i.e. especially not limited to the situation that the user equipment has already initiated such connection.

Especially, it is proposed, according to the present invention, that, in order to use the user equipment 20 with the mobile communication network 100, especially with the base station entity 111, the base station entity 111 first transmits a transmission opportunity information 200 (to the user equipment 20). The transmission opportunity information 200 indicates the possibility for the user equipment 20 to transmit data in uplink direction and/or the possibility for the user equipment 20 to request the transmission of data in downlink direction. After reception of the transmission opportunity information 200, the user equipment 20 might use the content of the transmission opportunity information 200 (e.g. the possible time slots and/or the possible network slices, etc - thus, the possibility or possibilities as indicated by means of the transmission opportunity information 200) in order to request data transmission in either uplink direction or in downlink direction or in both uplink and downlink direction.

Especially according to the present invention, the transmission opportunity information 200 indicates the possibility for the user equipment 20 to transmit data in uplink direction and/or the possibility for the user equipment 20 to request the transmission of data in downlink direction applying a certain granularity by means of using at least one out of the following:
-- the transmission opportunity information 200 indicates the possibility or possibilities to transmit data to be generally available,
-- the transmission opportunity information 200 is related to or inviting one traffic type or certain traffic types, especially broadband traffic or internet-of-things traffic,
-- the transmission opportunity information 200 is related to or inviting traffic being related to one 5QI value or to certain 5QI values,
-- the transmission opportunity information 200 is related to or inviting traffic being related to or transmitted using one bearer type or to certain bearer types,
-- the transmission opportunity information 200 is related to or inviting traffic being related to or transmitted using one network slice or to certain network slices, especially allowed network slices and/or subscribed network slices and/or active network slices.

It is especially preferred that the transmission opportunity information 200 is used - by means of indicating the possibility for the user equipment 20 to transmit data in uplink direction and/or the possibility for the user equipment 20 to request the transmission of data in downlink direction - to invite or incite data transmission and/or traffic, especially due to a currently detected or anticipated situation of comparatively low load of either the mobile communication network 100 or the air interface between the user equipment 20 and the base station entity 111 and/or due to a currently detected or anticipated situation of comparatively low data transmission costs especially in terms of energy prices, especially in case of abundant eco-friendly power availability. This especially applies to delay-tolerant traffic and/or traffic that is either expected to definitively need to be transmitted at some later point in time, or traffic where, at least partly, only a potential need to be transmitted is expected.

Especially, the transmission opportunity information 200 refers to the possibility or possibilities to use one or a plurality of network slices, in which case the transmission opportunity information 200 might be transmitted as a bitmap information, especially a bitmap information transmitted using a suitable system information block, SIB. Especially, the bitmap information refers to specific network slices, especially using a reference to one or a plurality of network slices and/or of pieces of slice/service type, SST, information of network slices.

Especially, the transmission opportunity information 200 refers to one or a plurality of configured network slices which configured network slices (or, rather, reference information thereto) are transmitted, by the base station entity 111 and/or the mobile communication network 100, to the user equipment 20. Especially, the bitmap information (as the transmission opportunity information 200) refers to such configured network slices, and especially either indicates, to the user equipment 20 and regarding each one of such configured network slices, the possibility to use transmit data in uplink direction and/or the possibility for the user equipment 20 to request the transmission of data in downlink direction. The bitmap information especially comprises, regarding each one of such configured network slices,
-- either one bit regarding the possibility to use transmit data in uplink direction and/or the possibility for the user equipment 20 to request the transmission of data in downlink direction,
-- or one bit regarding the possibility to use transmit data in uplink direction and another bit regarding the possibility for the user equipment 20 to request the transmission of data in downlink direction.

The transmission opportunity information 200 furthermore especially comprises a start time indication and/or an end time indication and/or a data volume or data amount indication regarding the invitation or the incitation for the user equipment 20 to transmit data in uplink direction and/or the invitation or the incitation for the user equipment 20 to request the transmission of data in downlink direction,
especially a start time indication and/or an end time indication and/or a data volume or data amount indication per configured network slice,
wherein especially the start time indication is implicitly provided by means of transmitting the transmission opportunity information 200 and wherein the transmission opportunity information 200 comprises a duration information indicating the end time information, especially a duration information per configured network slice,
wherein especially the duration information indicates - regarding the invitation or the incitation for the user equipment 20 to transmit data in uplink direction and/or the invitation or the incitation for the user equipment 20 to request the transmission of data in downlink direction - a duration of 10 seconds, or of 20 seconds, or of 30 seconds, or of 45 seconds, or of 60 seconds, or of 90 seconds, or of 2 minutes, or of 3 minutes, or of 4 minutes, or of 5 minutes, or of 6 minutes, or of 8 minutes, or of 10 minutes, or of 15 minutes, or of 20 minutes, or of 25 minutes, or of 30 minutes, or of 45 minutes, or of 60 minutes, or of 90 minutes, or of 2 hours, or of 3 hours, or of 4 hours, or of 5 hours, or of 6 hours.

The user equipment 20 is typically able to have at least one of the following radio resource control states: idle, inactive and connected,
wherein the transmission opportunity information 200 is especially used and/or applied, by the user equipment 20, if in a radio resource control state idle or inactive or connected, wherein especially the transmission opportunity information 200 is transmitted using common control signaling and/or dedicated control signaling, wherein especially common control signaling is used in case that the user equipment 20 is currently in radio resource control states idle or inactive and wherein especially dedicated control signaling is used in case that the user equipment 20 is currently in radio resource control state connected.

According to the present invention, in order to control the data transmission of a 5G user equipment 20 in a cellular network in RRC_IDLE (in turn triggering an RRC connection) or RRC_INACTIVE (triggering the active resume or the stalled connection) state two schemes could be used:
-- Common Control Signaling (via BCH; this would be valid for all user equipments in a particular radio cell) (or, common Control Signaling partitioned (via BCH valid for different groups of user equipments in a particular radio cell)) or
-- Dedicated Control Signaling (via DCH valid for only one particular user equipment 20 (and, obviously, multiple messages for different user equipment 20 are needed).

Both schemes can also be applied for a user equipment 20 in RRC CONNECTED state, while the dedicated control signaling would be more straight forward for this scenario.

It can be further distinguished for the above on the granularity of the validity (as contained in the transmission opportunity information 200):
-- Common for all data activity of the user equipment (i.e. generally),
-- Differentiated based on traffic types (Broadband, IoT, ...),
-- Differentiated based on 5QI / bearer type (e.g. 5QI = 8),
-- On the granularity of network slices (S-NSSAI), (Allowed/Subscribed/Active).

The structure of the S-NSSAI (Single Network Slice Selection Assistance Information) is such that is comprises a part corresponding to the Slice/Service Type, SST, information, and another part corresponding to the Slice Differentiator, SD. The S-NSSAI may include both the SST and SD fields (in which case the S-NSSAI length is 32 bits in total), or the S-NSSAI may just include the SST field (in which case the S-NSSAI length is 8 bits only). The SST is between 0 and 255 (256 values) and can be directly used as a metric to control/ trigger the data per network slice.

In the simplest form, a new SIB would need to be introduced with, e.g., the following structure:
SST bitmap (256 bits):
   Invite date for:
   1000010010010001000000001001000010....1000 (def.: Leftmost SST=0)
Optional duration timer per activated SST
   SST0 = x (ms/s/min)
   SST5 = x (ms/s/min)
   SST8 = x (ms/s/min)
Optional data amount per activated SST
   SST0 = y (bytes/kbytes/Mbytes)
   SST5 = y (bytes/kbytes/Mbytes)
   SST8 = y (bytes/kbytes/Mbytes)

A similar formation of signaling could be used on the decided control channel.

## Claims

1. Method for operating a user equipment (20) in or with a mobile communication network (100) comprising a radio access network (110), wherein the radio access network (110) comprises at least one base station entity (111), wherein data transmission is able to be conducted, between the user equipment (20) and the base station entity (111) and using an air interface between them, in downlink direction, involving data being transmitted by the base station entity (111) and received by the user equipment (20), or in uplink direction, involving data being transmitted by the user equipment (20) and received by the base station entity (111),
wherein, in order to use the user equipment (20) with the mobile communication network (100) the method comprises the following steps:
- - in a first step, the base station entity (111) transmits, and the user equipment (20) receives, a transmission opportunity information (200) to invite or incite data transmission and/or traffic due to a currently detected or anticipated situation of comparatively low load of either the mobile communication network (100) or the air interface between the user equipment (20) and the base station entity (111), wherein the transmission opportunity information (200) indicates the possibility for the user equipment (20) to transmit data in uplink direction or the possibility for the user equipment (20) to request the transmission of data in downlink direction,
- - in a second step, data transmission in either uplink direction or in downlink direction occurs, between the user equipment (20) and the base station entity (111), according to the possibility or possibilities as indicated by means of the transmission opportunity information (200),
**characterized in that** the transmission opportunity information (200) is transmitted as a bitmap information,
wherein the bitmap information refers to such configured network slices, and either indicates, to the user equipment (20) and regarding each one of such configured network slices, the possibility to use transmit data in uplink direction or the possibility for the user equipment (20) to request the transmission of data in downlink direction,
wherein the bitmap information comprises, regarding each one of such configured network slices,
-- either one bit regarding the possibility to use transmit data in uplink direction or the possibility for the user equipment (20) to request the transmission of data in downlink direction,
-- or one bit regarding the possibility to use transmit data in uplink direction and another bit regarding the possibility for the user equipment (20) to request the transmission of data in downlink direction.

2. Method according to claim 1, wherein the transmission opportunity information (200) indicates the possibility for the user equipment (20) to transmit data in uplink direction or the possibility for the user equipment (20) to request the transmission of data in downlink applying a certain granularity by means of using at least one out of the following:
-- the transmission opportunity information (200) indicates the possibility or possibilities to transmit data to be generally available,
-- the transmission opportunity information (200) is related to or inviting one traffic type or certain traffic types,
-- the transmission opportunity information (200) is related to or inviting traffic being related to one 5QI value or to certain 5QI values,
-- the transmission opportunity information (200) is related to or inviting traffic being related to or transmitted using one bearer type or to certain bearer types,
-- the transmission opportunity information (200) is related to or inviting traffic being related to or transmitted using one network slice or to certain network slices.

3. Method according to one of the preceding claims, wherein the invited or incited data transmission and/or traffic involves delay-tolerant traffic and/or traffic that is either expected to definitively need to be transmitted at some later point in time, or traffic where, at least partly, only a potential need to be transmitted is expected, wherein the invited or incited data transmission and/or traffic involves software updates or firmware updates or map updates, logging data.

4. Method according to one of the preceding claims, wherein - especially in case that the transmission opportunity information (200) refers to the possibility or possibilities to use one or a plurality of network slices - the transmission opportunity information (200) is transmitted as a bitmap information, ,
wherein the bitmap information is referring to specific network slices,
wherein the bitmap information is potentially able to address up to 256 different network slices and/or pieces of slice/service type, SST, information.

5. Method according to one of the preceding claims, wherein the transmission opportunity information (200) comprises a start time indication and/or an end time indication and/or a data volume or data amount indication regarding the invitation or the incitation for the user equipment (20) to transmit data in uplink direction or the invitation or the incitation for the user equipment (20) to request the transmission of data in downlink direction,
a start time indication and/or an end time indication and/or a data volume or data amount indication per configured network slice,
wherein the start time indication is implicitly provided by means of transmitting the transmission opportunity information (200) and wherein the transmission opportunity information (200) comprises a duration information indicating the end time information, especially a duration information per configured network slice,.

6. Method according to one of the preceding claims, wherein the user equipment (20) is able to have at least one of the following radio resource control states:
-- idle,
-- inactive and
-- connected,
wherein the transmission opportunity information (200) is used and/or applied, by the user equipment (20), if in a radio resource control state idle or inactive or connected,
wherein the transmission opportunity information (200) is transmitted using common control signaling and/or dedicated control signaling, wherein common control signaling is used in case that the user equipment (20) is currently in radio resource control states idle or inactive and wherein dedicated control signaling is used in case that the user equipment (20) is currently in radio resource control state connected.

7. User equipment for being operated in or with a mobile communication network (100), wherein the mobile communication network (100) comprises a radio access network (110), wherein the radio access network (110) comprises at least one base station entity (111), wherein data transmission is able to be conducted, between the user equipment (20) and the base station entity (111) and using an air interface between them, in downlink direction, involving data being received by the user equipment (20), or in uplink direction, involving data being transmitted by the user equipment (20),
wherein, in order to use the user equipment (20) with the mobile communication network (100), the user equipment (20) is configured such that:
-- the user equipment (20) receives a transmission opportunity information (200) to invite or incite data transmission and/or traffic due to a currently detected or anticipated situation of comparatively low load of either the mobile communication network (100) or the air interface between the user equipment (20) and the base station entity (111),
wherein the transmission opportunity information (200) indicates the possibility for the user equipment (20) to transmit data in uplink direction or the possibility for the user equipment (20) to request the transmission of data in downlink direction,
-- data transmission in either uplink direction or in downlink direction occurs, between the user equipment (20) and the base station entity (111), according to the possibility or possibilities as indicated by means of the transmission opportunity information (200),
**characterized in that** the transmission opportunity information (200) is transmitted as a bitmap information,
wherein the bitmap information refers to such configured network slices, and either indicates, to the user equipment (20) and regarding each one of such configured network slices, the possibility to use transmit data in uplink direction or the possibility for the user equipment (20) to request the transmission of data in downlink direction,
wherein the bitmap information comprises, regarding each one of such configured network slices,
-- either one bit regarding the possibility to use transmit data in uplink direction or the possibility for the user equipment (20) to request the transmission of data in downlink direction,
-- or one bit regarding the possibility to use transmit data in uplink direction and another bit regarding the possibility for the user equipment (20) to request the transmission of data in downlink direction.

8. System or mobile communication network (100) for operating a user equipment (20) in or with a mobile communication network (100) comprising a radio access network (110), wherein the radio access network (110) comprises at least one base station entity (111), wherein data transmission is able to be conducted, between the user equipment (20) and the base station entity (111) and using an air interface between them, in downlink direction, involving data being transmitted by the base station entity (111) and received by the user equipment (20), or in uplink direction, involving data being transmitted by the user equipment (20) and received by the base station entity (111),
wherein, in order to use the user equipment (20) with the mobile communication network (100), the system or mobile communication network (100) is configured such that:
-- the base station entity (111) transmits, and the user equipment (20) receives, a transmission opportunity information (200) to invite or incite data transmission and/or traffic due to a currently detected or anticipated situation of comparatively low load of either the mobile communication network (100) or the air interface between the user equipment (20) and the base station entity (111),
wherein the transmission opportunity information (200) indicates the possibility for the user equipment (20) to transmit data in uplink direction or the possibility for the user equipment (20) to request the transmission of data in downlink direction,
-- data transmission in either uplink direction or in downlink direction occurs, between the user equipment (20) and the base station entity (111), according to the possibility or possibilities as indicated by means of the transmission opportunity information (200),
**characterized in that** the transmission opportunity information (200) is transmitted as a bitmap information,
wherein the bitmap information refers to such configured network slices, and either indicates, to the user equipment (20) and regarding each one of such configured network slices, the possibility to use transmit data in uplink direction or the possibility for the user equipment (20) to request the transmission of data in downlink direction,
wherein the bitmap information comprises, regarding each one of such configured network slices,
-- either one bit regarding the possibility to use transmit data in uplink direction or the possibility for the user equipment (20) to request the transmission of data in downlink direction,
-- or one bit regarding the possibility to use transmit data in uplink direction and another bit regarding the possibility for the user equipment (20) to request the transmission of data in downlink direction.

9. Program comprising a computer readable program code which, when executed on a computer or on a user equipment (20), or on a base station entity (111) or on a radio access network node, or in part on a user equipment (20) and/or in part on a base station entity (111) and/or in part on a radio access network node, causes the computer or the user equipment (20) or the base station entity (111) or the radio access network node to perform a method according one of claims 1 to 6.

10. Computer-readable medium comprising instructions which, when executed on a computer or on a user equipment (20), or on a base station entity (111) or on a radio access network node, or in part on a user equipment (20) and/or in part on a base station entity (111) and/or in part on a radio access network node, causes the computer or the user equipment (20) or the base station entity (111) or the radio access network node to perform a method according one of claims 1 to 6.

## Patentansprüche

1. Verfahren zum Betreiben eines Benutzergeräts (20) in oder mit einem mobilen Kommunikationsnetz (100), das ein Funkzugangsnetz (110) umfasst, wobei das Funkzugangsnetz (110) mindestens eine Basisstationseinheit (111) umfasst,
wobei eine Datenübertragung **--** zwischen dem Benutzergerät (20) und der Basisstationseinheit (111) und unter Verwendung einer Luftschnittstelle zwischen ihnen in Abwärtsrichtung, wobei Daten von der Basisstationseinheit (111) gesendet und von dem Benutzergerät (20) empfangen werden, oder in Aufwärtsrichtung, wobei Daten von dem Benutzergerät (20) gesendet und von der Basisstationseinheit (111) empfangen werden **--** durchgeführt werden kann, wobei, um das Benutzergerät (20) mit dem mobilen Kommunikationsnetzwerk (100) zu verwenden, das Verfahren die folgenden Schritte umfasst:
- - in einem ersten Schritt sendet die Basisstationseinheit (111) eine Übertragungsgelegenheitsinformation (200) und empfängt das Benutzergerät (20), um zur Datenübertragung und/oder zum Datenverkehr aufgrund einer gegenwärtig erkannten oder erwarteten Situation vergleichsweise geringer Belastung entweder des Mobilkommunikationsnetzes (100) oder der Luftschnittstelle zwischen dem Benutzergerät (20) und der Basisstationseinheit (111) einzuladen oder anzuregen,
wobei die Übertragungsgelegenheitsinformation (200) die Möglichkeit für das Benutzergerät (20) anzeigt, Daten in Aufwärtsrichtung zu übertragen, oder die Möglichkeit für das Benutzergerät (20), die Übertragung von Daten in Abwärtsrichtung anzufordern,
-- in einem zweiten Schritt erfolgt die Datenübertragung entweder in Aufwärtsrichtung oder in Abwärtsrichtung zwischen dem Benutzergerät (20) und der Basisstationseinheit (111) entsprechend der Möglichkeit oder den Möglichkeiten, die mittels der Übertragungsgelegenheitsinformation (200) angezeigt werden,
**dadurch gekennzeichnet, dass** die Übertragungsgelegenheitsinformation (200) als eine Bitmap-Information übertragen wird,
wobei die Bitmap-Information sich auf solche konfigurierten Netzwerkscheiben bezieht und entweder die Benutzergerät (20) und bezüglich jeder dieser konfigurierten Netzwerkscheiben die Möglichkeit anzeigt, Daten in Aufwärtsrichtung zu übertragen, oder die Möglichkeit für das Benutzergerät (20), die Übertragung von Daten in Abwärtsrichtung anzufordern,
wobei die Bitmap-Informationen in Bezug auf jede dieser konfigurierten Netzwerkscheiben Folgendes umfassen,
-- entweder ein Bit bezüglich der Möglichkeit, Daten in Uplink-Richtung zu übertragen, oder die Möglichkeit für das Benutzergerät (20), die Übertragung von Daten in Downlink-Richtung anzufordern,
-- oder ein Bit bezüglich der Möglichkeit, Sendedaten in Uplink-Richtung zu verwenden, und ein weiteres Bit bezüglich der Möglichkeit für das Benutzergerät (20), die Übertragung von Daten in Downlink-Richtung anzufordern.

2. Verfahren nach Anspruch 1, wobei die Übertragungsgelegenheitsinformation (200) die Möglichkeit für das Benutzergerät (20) anzeigt, Daten in Aufwärtsrichtung zu übertragen, oder die Möglichkeit für das Benutzergerät (20) anzeigt, die Übertragung von Daten in Abwärtsrichtung anzufordern, wobei eine bestimmte Granularität angewendet wird, indem mindestens eine der folgenden Möglichkeiten verwendet wird:
-- die Übertragungsgelegenheitsinformation (200) zeigt die Möglichkeit oder die Möglichkeiten an, Daten zu übertragen, die allgemein verfügbar sind,
-- die Übertragungsgelegenheitsinformation (200) bezieht sich auf eine Verkehrsart oder bestimmte Verkehrsarten oder lädt dazu ein,
-- die Übertragungsgelegenheitsinformation (200) bezieht sich auf Verkehr, der sich auf einen 5QI-Wert oder auf bestimmte SQI-Werte bezieht, oder lädt dazu ein,
-- die Übertragungsgelegenheitsinformation (200) bezieht sich auf Verkehr, der sich auf einen Trägertyp oder bestimmte Trägertypen bezieht oder unter Verwendung dieser übertragen wird, oder lädt dazu ein,
-- die Übertragungsgelegenheitsinformationen (200) sich auf Verkehr beziehen oder dazu einladen, der sich auf einen Netzabschnitt oder auf bestimmte Netzabschnitte bezieht oder über diese übertragen wird.

3. Verfahren nach einem der vorhergehenden Ansprüche, wobei es sich bei der eingeladenen oder veranlassten Datenübertragung und/oder dem Verkehr um verzögerungstoleranten Verkehr und/oder um Verkehr handelt, von dem entweder erwartet wird, dass er zu einem späteren Zeitpunkt definitiv übertragen werden muss, oder um Verkehr, bei dem zumindest teilweise nur ein potenzieller Übertragungsbedarf erwartet wird, wobei es sich bei der eingeladenen oder veranlassten Datenübertragung und/oder dem Verkehr um Software-Updates oder Firmware-Updates oder Karten-Updates, Protokollierungsdaten handelt.

4. Verfahren nach einem der vorhergehenden Ansprüche, wobei - insbesondere für den Fall, dass sich die Übertragungsgelegenheitsinformation (200) auf die Möglichkeit oder Möglichkeiten zur Nutzung einer oder mehrerer Netzscheiben bezieht - die Übertragungsgelegenheitsinformation (200) als Bitmap-Information übertragen wird, ,
wobei sich die Bitmap-Informationen auf bestimmte Netzscheiben beziehen, wobei die Bitmap-Information potenziell in der Lage ist, bis zu 256 verschiedene Netzscheiben und/oder Stücke von Scheiben-/Dienstart-, SST-, Informationen zu adressieren.

5. Verfahren nach einem der vorhergehenden Ansprüche, wobei die Übertragungsgelegenheitsinformation (200) eine Startzeitangabe und/oder eine Endzeitangabe und/oder eine Datenvolumen- oder Datenmengenangabe bezüglich der Aufforderung oder der Aufforderung für das Teilnehmergerät (20), Daten in Uplink-Richtung zu übertragen, oder die Aufforderung oder die Aufforderung für das Teilnehmergerät (20), die Übertragung von Daten in Downlink-Richtung anzufordern, umfasst,
eine Startzeitangabe und/oder eine Endzeitangabe und/oder eine Datenvolumen- oder Datenmengenangabe pro konfigurierter Netzscheibe,
wobei die Startzeitangabe implizit durch die Übertragung der Sendegelegenheitsinformation (200) bereitgestellt wird und wobei die Sendegelegenheitsinformation (200) eine die Endzeitangabe anzeigende Dauerangabe, insbesondere eine Dauerangabe pro konfigurierter Netzscheibe, umfasst.

6. Verfahren nach einem der vorhergehenden Ansprüche, wobei das Benutzergerät (20) in der Lage ist, mindestens einen der folgenden Zustände der Funkressourcensteuerung einzunehmen:
-- im Leerlauf,
-- inaktiv und
-- verbunden,
wobei die Übertragungsgelegenheitsinformationen (200) von dem Benutzergerät (20) verwendet und/oder angewendet werden, wenn es sich in einem Funkressourcensteuerungszustand "Leerlauf" oder "inaktiv" oder "verbunden" befindet,
wobei die Übertragungsgelegenheitsinformation (200) unter Verwendung einer gemeinsamen Steuersignalisierung und/oder einer dedizierten Steuersignalisierung übertragen wird, wobei die gemeinsame Steuersignalisierung verwendet wird, wenn sich das Benutzergerät (20) gegenwärtig in den Funkressourcensteuerungszuständen Leerlauf oder inaktiv befindet, und wobei die dedizierte Steuersignalisierung verwendet wird, wenn sich das Benutzergerät (20) gegenwärtig im Funkressourcensteuerungszustand verbunden befindet.

7. Benutzergerät zum Betrieb in oder mit einem Mobilkommunikationsnetz (100), wobei das Mobilkommunikationsnetz (100) ein Funkzugangsnetz (110) umfasst, wobei das Funkzugangsnetz (110) mindestens eine Basisstationseinheit (111) umfasst, wobei eine Datenübertragung **--** zwischen dem Benutzergerät (20) und der Basisstationseinheit (111) und unter Verwendung einer Luftschnittstelle zwischen ihnen in Abwärtsrichtung, wobei Daten von dem Benutzergerät (20) empfangen werden, oder in Aufwärtsrichtung, wobei Daten von dem Benutzergerät (20) gesendet werden **--** durchgeführt werden kann,
wobei, um das Benutzergerät (20) mit dem mobilen Kommunikationsnetz (100) zu verwenden, das Benutzergerät (20) so konfiguriert ist, dass:
-- das Benutzergerät (20) eine Übertragungsgelegenheitsinformation (200) empfängt, um zur Datenübertragung und/oder zum Datenverkehr aufgrund einer gegenwärtig erkannten oder erwarteten Situation vergleichsweise geringer Belastung entweder des Mobilkommunikationsnetzes (100) oder der Luftschnittstelle zwischen dem Benutzergerät (20) und der Basisstationseinheit (111) einzuladen oder anzuregen,
wobei die Übertragungsgelegenheitsinformation (200) die Möglichkeit für das Benutzergerät (20) anzeigt, Daten in Aufwärtsrichtung zu übertragen, oder die Möglichkeit für das Benutzergerät (20), die Übertragung von Daten in Abwärtsrichtung anzufordern,
-- die Datenübertragung entweder in Aufwärtsrichtung oder in Abwärtsrichtung zwischen dem Benutzergerät (20) und der Basisstationseinheit (111) entsprechend der Möglichkeit oder den Möglichkeiten, die mittels der Übertragungsgelegenheitsinformation (200) angezeigt werden, stattfindet, **dadurch gekennzeichnet, dass** die Übertragungsgelegenheitsinformation (200) als eine Bitmap-Information übertragen wird,
wobei die Bitmap-Information sich auf solche konfigurierten Netzwerkscheiben bezieht und entweder dem Benutzergerät (20) und bezüglich jeder dieser konfigurierten Netzwerkscheiben die Möglichkeit anzeigt, Daten in Aufwärtsrichtung zu übertragen, oder die Möglichkeit für das Benutzergerät (20), die Übertragung von Daten in Abwärtsrichtung anzufordern,
wobei die Bitmap-Informationen in Bezug auf jede dieser konfigurierten Netzwerkscheiben Folgendes umfassen,
-- entweder ein Bit bezüglich der Möglichkeit, Daten in Uplink-Richtung zu übertragen, oder die Möglichkeit für das Benutzergerät (20), die Übertragung von Daten in Downlink-Richtung anzufordern,
-- oder ein Bit bezüglich der Möglichkeit, Sendedaten in Uplink-Richtung zu verwenden, und ein weiteres Bit bezüglich der Möglichkeit für das Benutzergerät (20), die Übertragung von Daten in Downlink-Richtung anzufordern.

8. System oder Mobilkommunikationsnetz (100) zum Betreiben eines Benutzergeräts (20) in oder mit einem Mobilkommunikationsnetz (100), das ein Funkzugangsnetz (110) umfasst, wobei das Funkzugangsnetz (110) mindestens eine Basisstationseinheit (111) umfasst, wobei eine Datenübertragungzwischen dem Benutzergerät (20) und der Basisstationseinheit (111) und unter Verwendung einer Luftschnittstelle zwischen ihnen in, Abwärtsrichtung, wobei Daten von der Basisstationseinheit (111) gesendet und von dem Benutzergerät (20) empfangen werden, oder in Aufwärtsrichtung, wobei Daten von dem Benutzergerät (20) gesendet und von der Basisstationseinheit (111) empfangen werden -- durchgeführt werden kann,
wobei, um die Benutzerausrüstung (20) mit dem mobilen Kommunikationsnetz (100) zu verwenden, das System oder das mobile Kommunikationsnetz (100) so konfiguriert ist, dass:
-- die Basisstationseinheit (111) eine Übertragungsgelegenheitsinformation (200) sendet und das Benutzergerät (20) empfängt, um zur Datenübertragung und/oder zum Datenverkehr aufgrund einer gegenwärtig erkannten oder erwarteten Situation vergleichsweise geringer Belastung entweder des Mobilkommunikationsnetzes (100) oder der Luftschnittstelle zwischen dem Benutzergerät (20) und der Basisstationseinheit (111) einzuladen oder anzuregen,
wobei die Übertragungsgelegenheitsinformation (200) die Möglichkeit für das Benutzergerät (20) anzeigt, Daten in Aufwärtsrichtung zu übertragen, oder die Möglichkeit für das Benutzergerät (20), die Übertragung von Daten in Abwärtsrichtung anzufordern,
-- die Datenübertragung entweder in Aufwärtsrichtung oder in Abwärtsrichtung zwischen dem Benutzergerät (20) und der Basisstationseinheit (111) entsprechend der Möglichkeit oder den Möglichkeiten, die mittels der Übertragungsgelegenheitsinformation (200) angezeigt werden, stattfindet, **dadurch gekennzeichnet, dass** die Übertragungsgelegenheitsinformation (200) als eine Bitmap-Information übertragen wird,
wobei die Bitmap-Information sich auf solche konfigurierten Netzwerkscheiben bezieht und entweder der Benutzergerät (20) und bezüglich jeder dieser konfigurierten Netzwerkscheiben die Möglichkeit anzeigt, Daten in Aufwärtsrichtung zu übertragen, oder die Möglichkeit für die Benutzergerät (20), die Übertragung von Daten in Abwärtsrichtung anzufordern,
wobei die Bitmap-Informationen in Bezug auf jede dieser konfigurierten Netzwerkscheiben Folgendes umfassen,
-- entweder ein Bit bezüglich der Möglichkeit, Daten in Uplink-Richtung zu übertragen, oder die Möglichkeit für die Benutzergerät (20), die Übertragung von Daten in Downlink-Richtung anzufordern,
-- oder ein Bit bezüglich der Möglichkeit, Sendedaten in Uplink-Richtung zu verwenden, und ein weiteres Bit bezüglich der Möglichkeit für das Benutzergerät (20), die Übertragung von Daten in Downlink-Richtung anzufordern.

9. Programm, das einen computerlesbaren Programmcode umfasst, der, wenn er auf einem Computer oder auf einem Benutzergerät (20) oder auf einer Basisstationseinheit (111) oder auf einem Funkzugangsnetzknoten oder teilweise auf einem Benutzergerät (20) und/oder teilweise auf einer Basisstationseinheit (111) und/oder teilweise auf einem Funkzugangsnetzknoten ausgeführt wird, den Computer oder das Benutzergerät (20) oder die Basisstationseinheit (111) oder den Funkzugangsnetzknoten veranlasst, ein Verfahren nach einem der Ansprüche 1 bis 6 durchzuführen.

10. Computerlesbares Medium mit Befehlen, die, wenn sie auf einem Computer oder auf einem Benutzergerät (20) oder auf einer Basisstationseinheit (111) oder auf einem Funkzugangsnetzknoten oder teilweise auf einem Benutzergerät (20) und/oder teilweise auf einer Basisstationseinheit (111) und/oder teilweise auf einem Funkzugangsnetzknoten ausgeführt werden, den Computer oder das Benutzergerät (20) oder die Basisstationseinheit (111) oder den Funkzugangsnetzknoten veranlassen, ein Verfahren nach einem der Ansprüche 1 bis 6 durchzuführen.

## Revendications

1. Procédé d'exploitation d'un équipement d'utilisateur (20) dans ou avec un réseau de communication mobile (100) comprenant un réseau d'accès radio (110), dans lequel le réseau d'accès radio (110) comprend au moins une entité de station de base (111), dans lequel la transmission de données peut être effectuée, entre l'équipement d'utilisateur (20) et l'entité de station de base (111) et en utilisant une interface aérienne entre eux, dans le sens de liaison descendant, impliquant des données transmises par l'entité de station de base (111) et reçues par l'équipement d'utilisateur (20), ou dans le sens de liaison montant, impliquant des données transmises par l'équipement d'utilisateur (20) et reçues par l'entité de station de base (111),
dans lequel, afin d'utiliser l'équipement d'utilisateur (20) avec le réseau de communication mobile (100), la méthode comprend les étapes suivantes :
- **-** dans une première étape, l'entité station de base (111) transmet, et l'équipement utilisateur (20) reçoit, une information d'opportunité de transmission (200) pour inviter ou inciter à la transmission de données et/ou au trafic en raison d'une situation actuellement détectée ou anticipée de charge comparativement faible du réseau de communication mobile (100) ou de l'interface aérienne entre l'équipement utilisateur (20) et l'entité station de base (111),
dans laquelle l'information d'opportunité de transmission (200) indique la possibilité pour l'équipement utilisateur (20) de transmettre des données dans le sens de liaison montant ou la possibilité pour l'équipement utilisateur (20) de demander la transmission de données dans le sens de liaison descendant,
- **-** dans une deuxième étape, la transmission de données dans le sens de liaison montant ou dans le sens de liaison descendant a lieu entre l'équipement d'utilisateur (20) et l'entité station de base (111), selon la ou les possibilités indiquées au moyen des informations d'opportunité de transmission (200), **caractérisée par le fait que** l'information d'opportunité de transmission (200) est transmise sous la forme d'une information bitmap,
dans laquelle l'information bitmap se réfère à de telles tranches de réseau configurées et indique, à l'équipement utilisateur (20) et concernant chacune de ces tranches de réseau configurées, la possibilité d'utiliser la transmission de données dans le sens de liaison montant ou la possibilité pour l'équipement utilisateur (20) de demander la transmission de données dans le sens de liaison descendant,
dans lequel les informations bitmap comprennent, pour chacune de ces tranches de réseau configurées,
- - soit un bit concernant la possibilité d'utiliser la transmission de données dans le sens de liaison montant ou la possibilité pour l'équipement utilisateur (20) de demander la transmission de données dans le sens de liaison descendant,
- **-** soit un bit concernant la possibilité d'utiliser des données de transmission dans le sens de liaison montant et un autre bit concernant la possibilité pour l'équipement utilisateur (20) de demander la transmission de données dans le sens de liaison descendant.

2. Procédé selon la revendication 1, dans lequel les informations d'opportunité de transmission (200) indiquent la possibilité pour l'équipement d'utilisateur (20) de transmettre des données dans le sens de liaison montant ou la possibilité pour l'équipement d'utilisateur (20) de demander la transmission de données dans le sens de liaison descendant en appliquant une certaine granularité au moyen de l'utilisation d'au moins l'un des éléments suivants :
-- les informations d'opportunité de transmission (200) indiquent la ou les possibilités de transmission de données généralement disponibles,
**--** les informations sur les possibilités de transmission (200) sont liées à un type de trafic ou à certains types de trafic, ou les invitent à le faire,
**--** les informations sur les possibilités de transmission (200) concernent ou invitent à un trafic lié à une valeur 5QI ou à certaines valeurs 5QI,
**--** l'information d'opportunité de transmission (200) est liée ou invite le trafic à être lié ou transmis à l'aide d'un type de support ou de certains types de support,
**--** l'information d'opportunité de transmission (200) est liée ou invite le trafic à être lié ou transmis en utilisant une tranche de réseau ou certaines tranches de réseau.

3. Méthode selon l'une des revendications précédentes, dans laquelle la transmission de données et/ou le trafic invités ou incités impliquent un trafic tolérant aux retards et/ou un trafic dont on s'attend à ce qu'il doive être transmis définitivement à un moment donné, ou un trafic dont on s'attend, au moins en partie, à ce qu'il ne doive être transmis que potentiellement, dans laquelle la transmission de données et/ou le trafic invités ou incités impliquent des mises à jour de logiciels ou de microprogrammes ou des mises à jour de cartes, des données d'enregistrement.

4. Procédé selon l'une des revendications précédentes, dans lequel - en particulier dans le cas où l'information d'opportunité de transmission (200) se réfère à la possibilité ou aux possibilités d'utiliser une ou plusieurs tranches de réseau - l'information d'opportunité de transmission (200) est transmise sous la forme d'une information bitmap, ,
l'information sur les possibilités de transmission (200) est transmise sous la forme d'une information bitmap, - l'information bitmap se réfère à des tranches de réseau spécifiques,
l'information bitmap peut potentiellement adresser jusqu'à 256 tranches de réseau différentes et/ou éléments d'information sur les tranches/types de service (SST).

5. Procédé selon l'une des revendications précédentes, dans lequel les informations d'opportunité de transmission (200) comprennent une indication de l'heure de début et/ou une indication de l'heure de fin et/ou une indication du volume ou de la quantité de données concernant l'invitation ou l'incitation pour l'équipement d'utilisateur (20) à transmettre des données dans le sens de liaison montant ou l'invitation ou l'incitation pour l'équipement d'utilisateur (20) à demander la transmission de données dans le sens de liaison descendant,
une indication de l'heure de début et/ou une indication de l'heure de fin et/ou une indication du volume de données ou de la quantité de données par tranche de réseau configurée,
dans lequel l'indication de l'heure de début est implicitement fournie au moyen de la transmission de l'information d'opportunité de transmission (200) et dans lequel l'information d'opportunité de transmission (200) comprend une information de durée indiquant l'information d'heure de fin, en particulier une information de durée par tranche de réseau configurée,.

6. Procédé selon l'une des revendications précédentes, dans lequel l'équipement d'utilisateur (20) peut avoir au moins l'un des états de contrôle des ressources radio suivants :
-- inactif,
-- inactif et
-- connecté,
dans lequel les informations d'opportunité de transmission (200) sont utilisées et/ou appliquées, par l'équipement utilisateur (20), s'il se trouve dans un état de contrôle de ressource radio idle, inactive ou connectée,
les informations d'opportunité de transmission (200) sont transmises à l'aide d'une signalisation de contrôle commune et/ou d'une signalisation de contrôle dédiée, la signalisation de contrôle commune étant utilisée lorsque l'équipement utilisateur (20) se trouve actuellement dans un état de contrôle des ressources radioélectriques inactif ou inactif et la signalisation de contrôle dédiée étant utilisée lorsque l'équipement utilisateur (20) se trouve actuellement dans un état de contrôle des ressources radioélectriques connecté.

7. Équipement d'utilisateur destiné à être utilisé dans ou avec un réseau de communication mobile (100), dans lequel le réseau de communication mobile (100) comprend un réseau d'accès radio (110), dans lequel le réseau d'accès radio (110) comprend au moins une entité de station de base (111), dans lequel la transmission de données peut être effectuée, entre l'équipement d'utilisateur (20) et l'entité de station de base (111) et en utilisant une interface aérienne entre eux, dans le sens de liaison descendant, impliquant la réception de données par l'équipement d'utilisateur (20), ou dans le sens de liaison montant, impliquant la transmission de données par l'équipement d'utilisateur (20),
dans lequel, afin d'utiliser l'équipement d'utilisateur (20) avec le réseau de communication mobile (100), l'équipement d'utilisateur (20) est configuré de telle sorte que :
-- l'équipement d'utilisateur (20) reçoit une information d'opportunité de transmission (200) pour inviter ou inciter à la transmission de données et/ou au trafic en raison d'une situation actuellement détectée ou anticipée de charge comparativement faible du réseau de communication mobile (100) ou de l'interface aérienne entre l'équipement d'utilisateur (20) et l'entité de station de base (111),
l'information d'opportunité de transmission (200) indique la possibilité pour l'équipement d'utilisateur (20) de transmettre des données dans le sens de liaison montant ou la possibilité pour l'équipement d'utilisateur (20) de demander la transmission de données dans le sens de liaison descendant,
**--** la transmission de données dans le sens de liaison montant ou dans le sens de liaison descendant a lieu, entre l'équipement utilisateur (20) et l'entité station de base (111), selon la ou les possibilités indiquées au moyen de l'information d'opportunité de transmission (200),
**caractérisée par le fait que** l'information d'opportunité de transmission (200) est transmise sous la forme d'une information bitmap,
dans laquelle l'information bitmap se réfère à de telles tranches de réseau configurées et indique, à l'équipement utilisateur (20) et concernant chacune de ces tranches de réseau configurées, la possibilité d'utiliser la transmission de données dans le sens montant ou la possibilité pour l'équipement utilisateur (20) de demander la transmission de données dans le sens de liaison descendant, dans lequel les informations bitmap comprennent, pour chacune de ces tranches de réseau configurées,
-- soit un bit concernant la possibilité d'utiliser la transmission de données dans le sens de liaison montant ou la possibilité pour l'équipement utilisateur (20) de demander la transmission de données dans le sens de liaison descendant,
**--** soit un bit concernant la possibilité d'utiliser la transmission de données dans le sens de liaison montant et un autre bit concernant la possibilité pour l'équipement utilisateur (20) de demander la transmission de données dans le sens de liaison descendant.

8. Système ou réseau de communication mobile (100) pour faire fonctionner un équipement d'utilisateur (20) dans ou avec un réseau de communication mobile (100) comprenant un réseau d'accès radio (110), dans lequel le réseau d'accès radio (110) comprend au moins une entité de station de base (111), dans lequel la transmission de données peut être effectuée, entre l'équipement d'utilisateur (20) et l'entité de station de base (111) et en utilisant une interface aérienne entre eux, dans le sens de liaison descendant, impliquant des données transmises par l'entité de station de base (111) et reçues par l'équipement d'utilisateur (20), ou dans le sens de liaison montant, impliquant des données transmises par l'équipement d'utilisateur (20) et reçues par l'entité de station de base (111), dans lequel, afin d'utiliser l'équipement d'utilisateur (20) avec le réseau de communication mobile (100), le système ou le réseau de communication mobile (100) est configuré de telle sorte que :
-- l'entité station de base (111) transmet, et l'équipement utilisateur (20) reçoit, une information d'opportunité de transmission (200) pour inviter ou inciter à la transmission de données et/ou au trafic en raison d'une situation actuellement détectée ou anticipée de charge comparativement faible du réseau de communication mobile (100) ou de l'interface aérienne entre l'équipement utilisateur (20) et l'entité station de base (111),
l'information d'opportunité de transmission (200) indique la possibilité pour l'équipement d'utilisateur (20) de transmettre des données dans le sens de liaison montant ou la possibilité pour l'équipement d'utilisateur (20) de demander la transmission de données dans le sens de liaison descendant,
**--** la transmission de données dans le sens de liaison montant ou dans le sens de liaison descendant a lieu, entre l'équipement utilisateur (20) et l'entité station de base (111), selon la ou les possibilités indiquées au moyen de l'information d'opportunité de transmission (200),
**caractérisée par le fait que** l'information d'opportunité de transmission (200) est transmise sous la forme d'une information bitmap,
dans laquelle l'information bitmap se réfère à de telles tranches de réseau configurées et indique, à l'équipement utilisateur (20) et concernant chacune de ces tranches de réseau configurées, la possibilité d'utiliser la transmission de données dans le sens de liaison montant ou la possibilité pour l'équipement utilisateur (20) de demander la transmission de données dans le sens de liaison descendant,
dans lequel les informations bitmap comprennent, pour chacune de ces tranches de réseau configurées,
-- soit un bit concernant la possibilité d'utiliser la transmission de données dans le sens de liaison montant ou la possibilité pour l'équipement utilisateur (20) de demander la transmission de données dans le sens de liaison descendant,
**--** soit un bit concernant la possibilité d'utiliser la transmission de données dans le sens de liaison montant et un autre bit concernant la possibilité pour l'équipement utilisateur (20) de demander la transmission de données dans le sens de liaison descendant.

9. Programme comprenant un code de programme lisible par ordinateur qui, lorsqu'il est exécuté sur un ordinateur ou sur un équipement d'utilisateur (20), ou sur une entité de station de base (111) ou sur un nœud de réseau d'accès radio, ou en partie sur un équipement d'utilisateur (20) et/ou en partie sur une entité de station de base (111) et/ou en partie sur un nœud de réseau d'accès radio, amène l'ordinateur ou l'équipement d'utilisateur (20) ou l'entité de station de base (111) ou le nœud de réseau d'accès radio à exécuter un procédé selon l'une des revendications 1 à 6.

10. Support lisible par ordinateur comprenant des instructions qui, lorsqu'elles sont exécutées sur un ordinateur ou sur un équipement d'utilisateur (20), ou sur une entité de station de base (111) ou sur un nœud de réseau d'accès radio, ou en partie sur un équipement d'utilisateur (20) et/ou en partie sur une entité de station de base (111) et/ou en partie sur un nœud de réseau d'accès radio, amènent l'ordinateur ou l'équipement d'utilisateur (20) ou l'entité de station de base (111) ou le nœud de réseau d'accès radio à exécuter un procédé selon l'une des revendications 1 à 6.
